# EUROPEAN PATENT APPLICATION

(11) **EP 4 333 237 A1**
(43) Date of publication of application: **06.03.2024**
(21) Application number: 23194358.0
(22) Date of filing: 30.08.2023
(51) Int. Cl.: H02J 3/32, F24D 19/10, H02J 7/00

(54) **THERMAL AND POWER MODULE FOR A LOGISTICS BUILDING**

(30) Priority: 30.08.2022 BE 202205685
(71) Applicant: Koutermolen nv, 9790 Wortegem-Petegem (BE)
(72) Inventor: Vanrenterghem, Kris, 9790 Wortegem-Petegem (BE)
(74) Representative: Brantsandpatents bv

(57) **Abstract**

The current invention relates to a movable shipping container-enclosed thermal and power module for a logistic building comprising a power section and a thermal section, said power section being configured to connect to renewable energy sources, such as solar panels, which energy is stored in at least one battery within the power section, which battery them makes said stored energy available to be used by a building and by a the thermal section of the module, the thermal section comprising a heat pump system for providing cooling and heating to a buffer water tank and a building.

## Description

### FIELD OF THE INVENTION

The present invention relates to a composition for storing and distributing energy. More in particular, the present invention relates to a composition for storing and distributing electrical and thermal energy.

### BACKGROUND

Such a device/composition according to the preamble is also known from CN214841747U. CN '747 further describes a multi-energy combined driving solar energy and ground source heat pump composite system which comprises a photovoltaic photo-thermal integrated module which is connected with a water tank and a plate heat exchanger through pipelines, and the plate heat exchanger is respectively connected with a living water tank and end equipment of an air-conditioning room. The ground source heat pump unit is respectively connected with the ground heat exchanger and the living water tank through pipelines; the photovoltaic and photo-thermal integrated module is sequentially connected with the storage battery pack, the inverter and the public power grid, and the storage battery pack is further connected with the wind generating set.

Also known is the storage type hot water supply system from WO2020225905A1. This storage type hot water supply system is installed so as to be supplied power from a power grid facility and a power generation device that is connected to the power grid facility and that generates power by using renewable energy. The storage type hot water supply system comprises a hot water storage tank, a heating means that heats water by consuming power, and a control device that controls a heating operation to heat the water in the hot water storage tank with the heating means. The control device can change a target hot water output temperature in the heating operation to at least two temperatures: a maximum hot water output temperature that is the maximum temperature from within the target hot water output temperatures that can be set and a low hot water output temperature that is a temperature lower than the maximum hot water output temperature. The control device executes the heating operation using surplus power with the maximum hot water output temperature set as the target hot water output temperature during output restrictions in which the sale of surplus power, obtained by subtracting electrical power used from the power generated by the power generation device, is restricted.

The systems disclosed in CN '747 and WO '905 are not suitable to be quickly deployed as they installation depends on a significant number of adaptations to the facilities meant to receive said systems. In particular, such systems are not well suited to logistics facilities where any waste of storage space is ideally minimized.

The present invention targets at solving at least one of the aforementioned disadvantages. The invention thereto aims to provide a modular composition combining thermal regulation and power that are easy and fast to deploy and, if necessary, replace.

### SUMMARY OF THE INVENTION

The present invention and embodiments thereof serve to provide a solution to one or more of above-mentioned disadvantages. To this end, the present invention relates to a thermo-electrical module for a logistics building according to claim 1

Preferred embodiments of the device are shown in any of the claims 2 to 12. A specific preferred embodiment relates to an invention according to claim 2.

In a second aspect, the present invention relates to a method to claim 13. More particular, the method as described herein provides of operating the device according to the first aspect and/or any of its embodiments.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** schematically represents a thermo-electrical module according to the invention.
**Figure 2** schematically shows the hydraulic elements of the thermal sub-module.
**Figure 3** shows the settings for the water temperature on the hot side of the heat pump in function of the outside temperature.
**Figure 4** shows the settings for the heat medium temperature on the cold side of the heat pump in function of the outside temperature.

### DETAILED DESCRIPTION OF THE INVENTION

The present invention concerns a thermo-electric module comprising an electrical sub-module and a thermal sub-module, both or each of which are provided in a shipping container or with means to transported as a shipping container. This advantageously permits a fast deployment and startup. The electrical sub-module includes provisions for electrical connection to the electrical grid and/or to a renewable energy source such as solar panels or wind turbines, which energy may then be stored in one or more batteries within the electrical sub-module. The power from the electrical sub-module can then be provided to the building and/or to the thermal sub-module. The thermal sub-module is configured to provide cooling for the building and electrical sub-module, as well as hot water for a buffer water tank and/or directly to the building. The thermo-electric module can work connected or independently from the power grid, thereby being particularly suitable to be deployed to, for example, construction sites.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a thermo-electric module for a logistics building comprising:
an electrical sub-module comprising a first input means with transformer for alternate current, said first input means being suitable to connect to a power grid, a second input means for direct current, electricity storage means and an inverter for providing alternate current to the building and/or other modules;
a thermal sub-module comprising a heat pump having a cold side input and output in fluid connection with the load side of a first heat exchanger, the hot side of a second heat exchanger and an outdoor cooler disposed above the heat pump and/or on top of the electrical sub-module, and a hot side input and output in fluid connection with the hot side of the first heat exchanger and the load side of a third heat exchanger, the sub-module further comprising at least one pump on the cold side of the heat pump, at least one water inlet, and pipes for providing the fluid connections;

In order to substantially improve the transportability of the device, the whole device, or at least each module is configured to be fitted inside a shipping container or is suitable to be transported as a shipping container. Depending on the power and/or thermal demands of the building, the whole device may be provided in a single frame and/or shipping container, or each of the sub-modules may be provided in their own frames and/or container. In a preferred embodiment, the power stored and/or received by the electrical sub-module provides at least part, more preferably the totality of the electricity consumed by the thermal sub-module. This allows the building to be at least semi-independent of the power grid. By preference, the electrical sub-module is connected to renewable energy power sources, preferable solar and/or wind power, and in this way allowing for the building to operate independently of the power grid. In an embodiment, the electricity storage means are at least one, preferably more battery packs. In an embodiment, the electrical sub-module comprises a hydrogen fuel cell. Most preferably, the electrical sub-module includes both at least one battery pack and at least one fuel cell, in this way increasing the flexibility of said sub-module. In a preferred embodiment, the cooler is placed atop the electrical sub-module, in this way taking advantage of the heat generated by said sub-module to prevent frosting and/or freezing of the cooler. In this way, the device may be made simpler and dispense with at least one heat exchanger, thus reducing cost and size of each device.

In an embodiment, the load side outlet of the second heat exchanger is in further fluid connection with a first outlet port configured to be connected to a buffer tank, the load side inlet of the second heat exchanger being in further fluid connection with a first return port configured to be connected to said buffer tank. This advantageously permits the warming of the water of said buffer tank, which buffer tank is to be used to store water for a fire quenching system. If needed some of said water is also made available for internal consumption in the building, for example for showers. The buffer tank may be part of the module or external to said module. The warming of the water within the tank has a further advantage of avoiding the freezing of said water, thereby maintaining a high readiness level in case of fire and/or need for consumption inside the building. By preference the buffer tank is thermally isolated.

In an embodiment, the first return port and the second heat exchanger are fluidly connected by a pipe comprising a pump directed towards the second heat exchanger. This pump, being disposed between the buffer tank and the second heat exchanger, advantageously permits circulating the water from said tank and through the second heat exchanger. By preference, said return pipe is located near the bottom of the tank, thereby removing water from a colder layer of water, thereby increasing the energy efficiency while extending the useful life of the pump.

In an embodiment, the hot side of the second heat exchanger is connected to the hot side outlet of the heat pump by means of a hot side of a collector, the second hot side of the heat changer being in further fluid connection with the inlet of the hot side of the heat pump by means of a cold side of the collector. The collector advantageously permits directing hot water and receive cold water from several elements of the device, while having a smaller envelope, and thus saving space within the device.

In an embodiment, the hot side of the collector is further provided with an outlet for providing hot water to the building, and the cold side of said collector being provided with an inlet for receiving water from the building. This permits supply the building with warm water during periods of normal demand, and without having to deplete the buffer tank.

In an embodiment, the hot side of the collector is further provided with an outlet for providing hot water to the hot side of the first heat exchanger, and the cold side of said collector being provided with an inlet for receiving water from said first heat exchanger.

In an embodiment, the inlet pipe of the cooler is in fluid connection with a three-way valve, which valve is configured to alternately further connect to the outlet of the load side of the first heat exchanger or the outlet of the load side of the third heat exchanger. By preference, the inlet pipe of the cooler comprises a circulation pump. In this way, circulation of the heat medium through the cooler is not depending only on any at least one circulation pump inside the heat pump.

In an embodiment, the outlet pipe of the cooler is in fluid connection with the inlet of the load side of the first heat exchanger, the inlet of the cold side of the heat pump and a three-way valve disposed to the inlet pipe of the load side of the third heat exchanger, said three way valve having a position which bypasses the inlet and outlet of the load side of the third heat exchanger. This permits the creation of a direct flow between the third heat exchanger and the cooler, allowing for the execution of a defrosting operation, should the temperature of any of the elements of the thermal sub-module, in particular the cooler, drops below the freezing point of the heat medium.

In an embodiment, the inlet pipe of third heat exchanger comprises a circulation pump. By preference, each inlet of the third heat exchanger comprises a circulation pump. On the load side, such pump prevents any substantial pressure drops within the heat medium circuit. On the hot side, the circulation pump permits directing water through the third heat exchanger and to any user element on the outlet side of said heat exchanger without having to rely on other circulation pumps external to the thermal sub-module.

In an embodiment, all inlets and outlets of each heat exchanger and each inlet and outlet of the heat pump comprise a two-way valve. This advantageously allows for a superior control over the flow of fluids passing through each of these elements, thereby allowing for said flows to be fine-tuned for maximum efficiency. By preference, said valves, and others mentioned in previous embodiments, are in communication with a controller configured to send signals to each pump with information about the desired aperture of each valve. Said controller has, yet more preferably, several modes with pre-tuned setting for each valve, each mode corresponding, for example though not exclusively, to a cold weather mode, winter mode, defrosting operation, etc..

In an embodiment, the heat side of the third heat exchanger comprises includes a circulation pump on the inlet pipe, said inlet pipe being in further connection with a the warm side of a second collector for receiving water from refrigeration systems of the building and/or electrical module, the outlet of the third heat exchanger being in fluid connection with a cold side of the second collector for dispensing water to said refrigeration systems of the building and/or electrical module.

A second aspect of the invention provide a method for operation the device as disclosed in the previous aspect and any of its embodiments. The method including the steps of:
a. Setting a safety temperature at which, a cooler is at risk of freezing;
b. Operating the heat pump;
c. Passing hot water from the hot side of the heat pump through a first and second heat exchanger;
d. Passing heat medium, preferably a glycol solution, from the cold side of the heat pump through the load side of the first heat exchanger, the cooler and back into the heat pump.

Should the temperature of the coolers reaches a the predetermined set temperature, a defrosting operation of said coolers is carried out. By preference, the heat medium flow through the cooler is adjusted according to the outside temperature, more preferably by means of a controller having at least a cold weather setting and a warm weather setting, each setting having information about the speed of a circulation pump and at least one valve capable of changing the speed of heat medium through the cooler. By preference, for the warm weather setting, the heat medium flow through the cooler is adjusted to between 5 and 10 cubic meters per hour, more preferably, 6 and 9 cubic meters per hour, 7 and 8 cubic meters per hour, most preferably 7, 2 and 7.8 cubic meters per hour. By preference, for the cold weather setting, the heat medium flow through the cooler is adjusted to between 15 and 20 cubic meters per hour, more preferably, 16 and 19 cubic meters per hour, 17 and 19,5 cubic meters per hour, most preferably 18 and 18,5 cubic meters per hour. In this way, the temperature of the heat medium through the cooler is maintained constant by reducing the dwell time of said heat medium inside the cooler. This advantageously avoid freezing of the heat medium and frost formation on the cooler during the winter months.

A person skilled in the art will appreciate that a method according to the first aspect is preferably performed with thermo-electric module according to the first aspect and that thermo-electric module according to the second first aspect is preferably configured for performing a method according to the second aspect. Accordingly, each feature described in this document, above as well as below, may relate to any of the two aspects of the present invention.

In an embodiment, the set safety temperature depends on the composition of the sent by the heat pump to the cooler. This safety temperature may also be changed with the replacement or adjustment of the composition of the heat medium, or example, though not exclusively, by adjusting the levels of glycol in a glycol-water solution, more glycol during the wither moths, less glycol during the summer months.

In an embodiment, the operation of defrosting includes the steps of:
a. Stopping the heat pump;
b. Set the circulation pump of the inlet pipe of the third heat exchanger to its maximum speed;
c. Direct the three-way valve on the inlet branch of the third heat exchanger towards the cooler, allowing heat medium to flow from the third heat exchanger to said cooler;
d. Lower the set temperature of the electrical module by 5°C;
e. Maintain current operation for 30 minutes;
f. Resume normal operation.

The defrosting operation advantageously permits avoiding damage to any of the elements of the device due to ice formation on their surface, as well as due to the fluid contents of said elements freezing and expanding inside the elements, causing them to burst.

The invention is further described by the following non-limiting examples which further illustrate the invention, and are not intended to, nor should they be interpreted to, limit the scope of the invention.

The present invention will be now described in more details, referring to examples that are not limitative.

### DESCRIPTION OF FIGURES

With as a goal illustrating better the properties of the invention the following presents, as an example and limiting in no way other potential embodiments and applications, a description of a number of preferred embodiments of the device based on the invention, wherein:

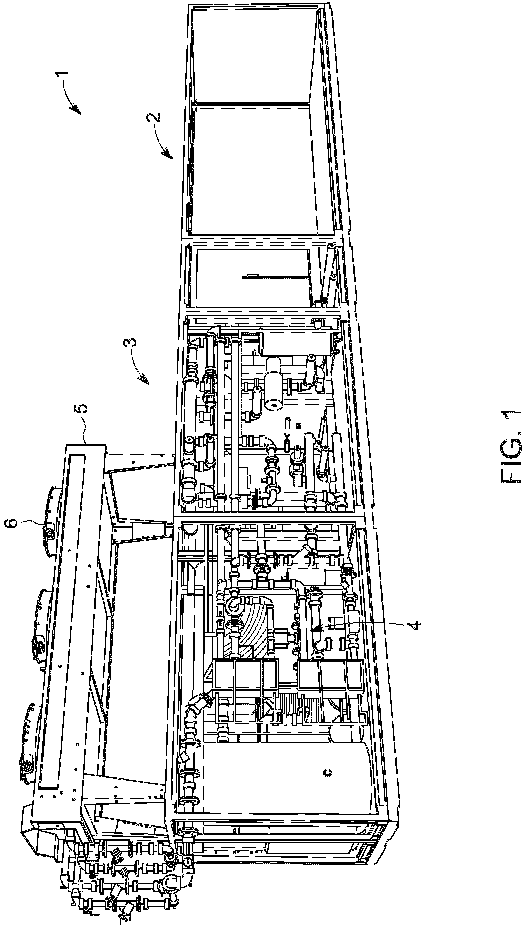

FIG. 1 schematically represents a thermo-electrical module (1) according to the invention. The thermo-electric module (1), more specifically, for a logistics building comprises two main sub-modules, an electrical submodule (2 not shown) and a thermal sub-module (3). The electrical module (2) comprises a first input means with transformer for alternate current, said first input means being suitable to connect to a power grid, a second input means for direct current, electricity storage means and an inverter for providing alternate current to the building and/or other modules. Said other modules are to be understood as both other electrical modules as well as at least one thermal module (3). As will be appreciated, the presented modules are obvious laid out so as to possess the same dimension as a shipping container, therefore lending themselves to, advantageously, be transported in the same manner as said containers. Such dimensions may be according for example, though not limited to, ISO containers according to the norm ISO 668:2020, flat rack with or without sides, 20ft container, 40 ft containers, or the like. A thermal sub-module (3) is shown in FIG. 1 in a most advantageous configuration, wherein a cooler (5) unit is shown located directly above most elements of the thermal module (3), and more importantly, the heat pump (4). In such a configuration, the residual heat released by the heat pump (4), is, by virtue of convection and aided by the updraft created by the shown ventilation elements (6), forced through the cooler (5), thereby advantageously reducing the possibility of frost of said elements in all but the most severe conditions.

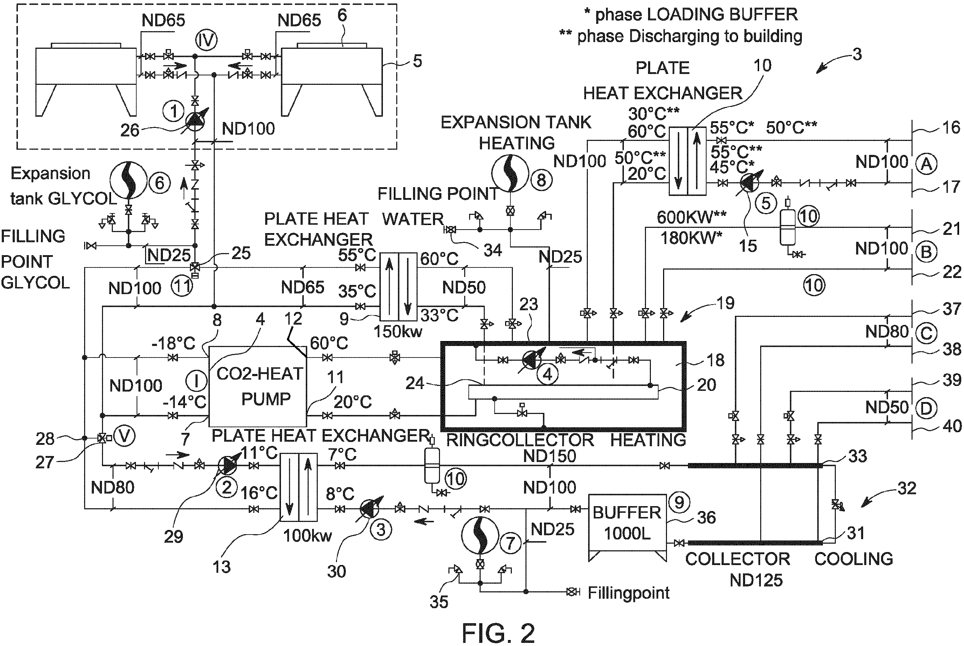

FIG. 2 schematically shows the hydraulic elements of the thermal sub-module (3). The heat pump (4) is shown having a cold side input (7) and output (8) ports in fluid connection with the load side of a first heat exchanger (9), the hot side of a second heat exchanger (10), and the outdoor cooler (5). The hot side input (11) and output (12) ports of the heat pump (4) are shown in fluid connection with the hot side of the first heat exchanger (9) and the load side of a third heat exchanger (13). The load side outlet of the second heat exchanger (10) is shown in further fluid connection with a first outlet port (17) configured to be connected to a buffer tank of the building (14 not shown), the load side inlet of the second heat exchanger (10) being in further fluid connection with a first return port (16) configured to be connected to said buffer tank (14 not shown). The buffer tank (14 not shown) can in this way be filled with warm water, advantageously allowing said water to be used both as water quenching medium as well as for internal consumption in the building. The first return port and the second heat exchanger (10) are fluidly connected by a pipe comprising a pump (15) directed towards the second heat exchanger (10). The hot side of the second heat exchanger (10) is connected to the hot side outlet (12) of the heat pump (4) by means of a hot side (18) of a collector (19), the second hot side of the heat changer (10) being in further fluid connection with the inlet of the hot side (11) of the heat pump (4) by means of a cold side of the collector (20). The collector (19) advantageously permits coupling the single flow of water out of the hot side outlet (12) of the heat pump (4) with a plurality of load elements, thereby reducing the size of the whole device. This advantage is further improved upon by providing the means to connect the inlet of the hot side (11) of the heat pump (4) with the return outlets of multiple load elements by means of a cold side (20) of the same collector (19), further reducing the space necessary to contain the whole device. The hot side of the collector (18) is further provided with an outlet (21) for providing hot water to the building, and the cold side (20) of said collector (19) being provided with an inlet (22) for receiving water from the building. In this way, the thermal module (3) can directly supply hot water to the building without first having to build up a buffer volume. The hot side (18) of the collector (19) is further provided with an outlet (23) for providing hot water to the hot side of the first heat exchanger (9), and the cold (20) side of said collector (19) being provided with an inlet (24) for receiving water from said first heat exchanger (9). The inlet pipe of the cooler (5) is in fluid connection with a three-way valve (25), which valve is configured to alternately further connect to the outlet of the load side of the first heat exchanger (9) or the outlet of the load side of the third heat exchanger (13). The inlet pipe of the cooler (5) comprises also a circulation pump (26). In this way, heat medium is more efficiently pumped through the cooler (5) internal elements, and without depending on any internal pump of the het pump (4). The outlet pipe of the cooler (5) is in fluid connection with the inlet of the load side of the first heat exchanger (9), the inlet of the cold side (7) of the heat pump (4) and a three-way valve (27) disposed to the inlet pipe of the load side of the third heat exchanger (13), said three way valve (27) having a position which creates a bypass (28) the inlet and outlet of the load side of the third heat exchanger. The inlet pipe of third heat exchanger (13) comprises a circulation pump (29). This permits alternate the delivery of cold heat medium coming from the heat pump (4) to the cooler (5) in order to deliver said heat medium from the third heat exchanger (13) to the cooler (4), thereby allowing a defrosting operation of the cooler (5) to take place in case said the temperature of said cooler (5) becomes too low. The figure shown all inlets and outlets of each heat exchanger and each inlet and outlet of the heat pump (4) comprise a two-way valve. This allows for a vastly superior control over the heat transfer within the thermal module (3), which permits a very high energy efficiency and much lower environmental impact. As is also evidenced in the figure, the heat side of the third heat exchanger (13) comprises a circulation pump (30) on the inlet pipe, said inlet pipe being in further connection with a the warm side (31) of a second collector (32) for receiving water from refrigeration systems of the building and/or electrical module (2) via an inlet to building refrigeration (38) and an inlet for the electrical sub-module (40). The outlet of the cold side of the third heat exchanger (13) being in fluid connection with a cold side (33) of the second collector (32) for dispensing water to said refrigeration systems of the building and/or electrical sub-module (2) via an outlet to building refrigeration (37) and an outlet for the electrical sub-module (39). This allows for heat recuperated from the inside of the building to be recovered by the thermal sub-module (3), which heat can then be used elsewhere. A first water inlet (34) is provided in fluid connection with the cold side (20) of the first connector (19). A second water inlet (35) is shown in fluid connection with the inlet of the circulation pump (30) on the hot side of the third heat exchanger (13) and a second buffer tank (36). These inlets (34, 35) advantageously permit connecting the thermal sub-module (3) to a water supply.

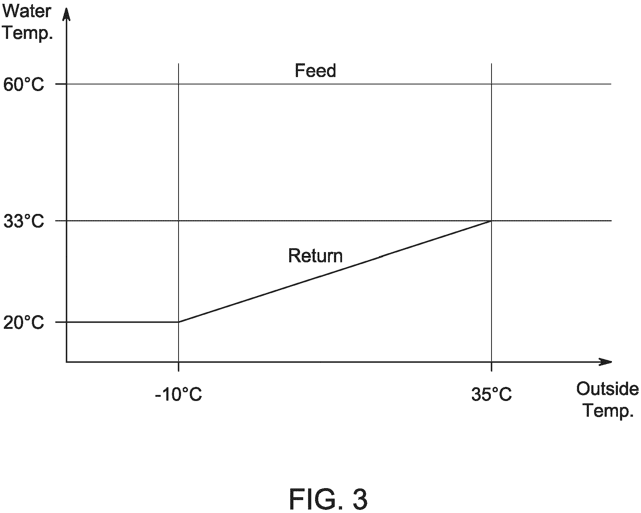

FIG. 3 shows the settings for the water temperature on the hot side of the heat pump (4) in function of the outside temperature.

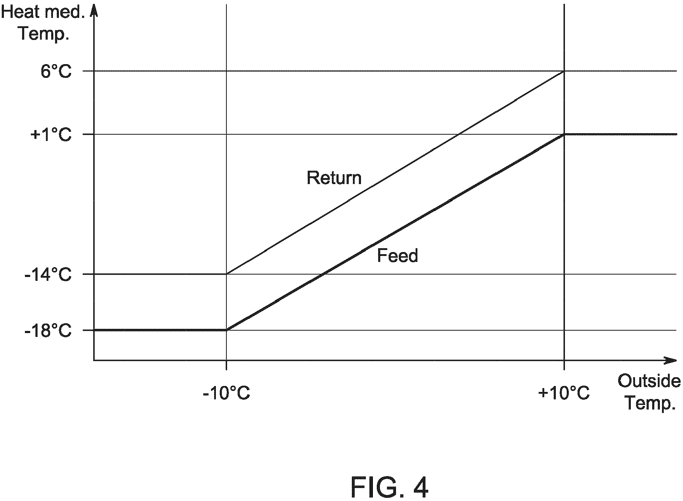

FIG. 4 shows the settings for the heat medium temperature on the cold side of the heat pump (4) in function of the outside temperature.

### List of numbered items:

- 1: thermo-electric module
- 2: electrical submodule
- 3: thermal sub-model
- 4: heat pump
- 5: cooler
- 6: ventilation elements
- 7: cold side input of heat pump
- 8: cold side output of heat pump
- 9: first heat exchanger
- 10: second heat exchanger
- 11: hot side input of heat pump
- 12: hot side output of heat pump
- 13: third heat exchanger
- 14: building buffer tank
- 15: pump
- 16: outlet port to buffer tank
- 17: inlet port from buffer tank
- 18: hot side of first collector
- 19: first collector
- 20: cold side of first collector
- 21: outlet of first collector to building
- 22: inlet of first collector to receive water from building
- 23: outlet of first collector to first heat exchanger
- 24: inlet of first collector to receive water from first heat exchanger
- 25: three-way valve of the cooler
- 26: circulation pump of the cooler inlet
- 27: three-way valve of the load side inlet pipe of the third heat exchanger
- 28: bypass
- 29: circulation pump of the load side inlet pipe of the third heat exchanger
- 30: circulation pump of the hot side inlet pipe of the third heat exchanger
- 31: warm side of second collector
- 32: second collector
- 33: cold side of second collector
- 34: first water inlet
- 35: second water inlet
- 36: second buffer tank

It is supposed that the present invention is not restricted to any form of realization described previously and that some modifications can be added to the presented embodiments without reappraisal of the appended claims. For example, the present invention has been described referring to logistics buildings, but it is clear that the invention can be applied to many other types of building or infrastructures for instance or to events. A particularly advantageous use of the thermo-electrical module according to the invention is the possibility to install such units in disaster relief camps for example.

The present invention is in no way limited to the embodiments shown in the figures. On the contrary, embodiments according to the present invention may be realized in many different ways without departing from the scope of the invention.

## Claims

1. A thermo-electric module for a logistics building comprising:
g. an electrical sub-module comprising a first input means with transformer for alternate current, said first input means being suitable to connect to a power grid, a second input means for direct current, electricity storage means and an inverter for providing alternate current to the building and/or other modules;
h. a thermal sub-module comprising a heat pump having a cold side input and output in fluid connection with the load side of a first heat exchanger, the hot side of a second heat exchanger and an outdoor cooler disposed above the heat pump and/or on top of the electrical sub-module, and a hot side input and output in fluid connection with the hot side of the first heat exchanger and the load side of a third heat exchanger, the sub-module further comprising at least one pump on the cold side of the heat pump, at least one water inlet, and pipes for providing the fluid connections;
**characterized in that**, at least each module is configured to be fitted inside a shipping container or is suitable to be transported as a shipping container.

2. The device according to previous claim 1, **characterized in that**, the load side outlet of the second heat exchanger is in further fluid connection with a first outlet port configured to be connected to a buffer tank, the load side inlet of the second heat exchanger being in further fluid connection with a first return port configured to be connected to said buffer tank.

3. The device according to previous claim 2, **characterized in that**, the first return port and the second heat exchanger are fluidly connected by a pipe comprising a pump directed towards the second heat exchanger.

4. The device according to any of the previous claims, **characterized in that**, the hot side of the second heat exchanger is connected to the hot side outlet of the heat pump by means of a hot side of a collector, the second hot side of the heat changer being in further fluid connection with the inlet of the hot side of the heat pump by means of a cold side of the collector.

5. The device according to claim 4, **characterized in that**, the hot side of the collector is further provided with an outlet for providing hot water to the building, and the cold side of said collector being provided with an inlet for receiving water from the building.

6. The device according to any of the previous claims 4-5, **characterized in that**, the hot side of the collector is further provided with an outlet for providing hot water to the hot side of the first heat exchanger, and the cold side of said collector being provided with an inlet for receiving water from said first heat exchanger.

7. The device according to any of the previous claims, **characterized in that**, the inlet pipe of the cooler is in fluid connection with a three-way valve, which valve is configured to alternately further connect to the outlet of the load side of the first heat exchanger or the outlet of the load side of the third heat exchanger.

8. The device according to previous claim 7, **characterized in that**, the inlet pipe of the cooler comprises a circulation pump.

9. The device according to any of the previous claims 7-8, **characterized in that**, the outlet pipe of the cooler is in fluid connection with the inlet of the load side of the first heat exchanger, the inlet of the cold side of the heat pump and a three-way valve disposed to the inlet pipe of the load side of the third heat exchanger, said three way valve having a position which bypasses the inlet and outlet of the load side of the third heat exchanger.

10. The device according to any of the previous claims 7-9, **characterized in that**, the inlet pipe of third heat exchanger comprises a circulation pump.

11. The device according to any of the previous claims, **characterized in that**, all inlets and outlets of each heat exchanger and each inlet and outlet of the heat pump comprise a two-way valve.

12. The device according to any of the previous claims, **characterized in that**, the heat side of the third heat exchanger comprises includes a circulation pump on the inlet pipe, said inlet pipe being in further connection with a the warm side of a second collector for receiving water from refrigeration systems of the building and/or electrical module, the outlet of the third heat exchanger being in fluid connection with a cold side of the second collector for dispensing water to said refrigeration systems of the building and/or electrical module.

13. Method for operation the device according to claim 1, the method including the steps of:
a. Setting a safety temperature at which, a cooler is at risk of freezing;
b. Operating the heat pump;
c. Passing hot water from the hot side of the heat pump through a first and second heat exchanger;
d. Passing heat medium, preferably a glycol solution, from the cold side of the heat pump through the load side of the first heat exchanger, the cooler and back into the heat pump.
**characterized in that**, if the temperature of the coolers reaches a the predetermined set temperature, a defrosting operation of said coolers is carried out.

14. The method according to previous claim 13, **characterized in that**, the set safety temperature depends on the composition of the sent by the heat pump to the cooler.

15. The method according to any of the previous claims 13-14, **characterized in that**, the operation of defrosting includes the steps of:
a. Stopping the heat pump;
b. Set the circulation pump of the inlet pipe of the third heat exchanger to its maximum speed;
c. Direct the three-way valve on the inlet branch of the third heat exchanger towards the cooler, allowing heat medium to flow from the third heat exchanger to said cooler;
d. Lower the set temperature of the electrical module by 5°C;
e. Maintain current operation for 30 minutes;
f. Resume normal operation.
